# EUROPÄISCHE PATENTANMELDUNG

(11) **EP 0 795 266 A2**
(43) Veröffentlichungstag der Anmeldung: **17.09.1997**
(21) Anmeldenummer: 97100594.7
(22) Anmeldetag: 16.01.1997
(51) Int. Cl.: A01G 1/12, A47L 5/14

(54) **Blas- und Saugvorrichtung, insbesondere Saughäcksler zum Sammeln und Zerkleinern von Laub und dergleichen**

(30) Priorität: 12.03.1996 DE 19609569
(71) Anmelder: adlus GmbH, 89257 Illertissen (DE)
(72) Erfinder: Keim, Norbert, 89281 Altenstadt (DE)
(74) Vertreter: Dziewior, Joachim, Dipl.-Phys. Dr.

(57) **Zusammenfassung**

Die Blas- und Saugvorrichtung ist insbesondere für Saughäcksler zum Sammeln und Zerkleinern von Laub, Gras, Abfall und dergleichen vorgesehen. Sie besteht aus einem Gebläsegehäuse (1) und einem darin angeordneten, durch eine Antriebseinheit (3) drehantreibbaren Gebläserad (2) zum Ansaugen von Luft durch eine Einlaßöffnung (4) des Gebläsegehäuses (1) und zum Ausstoßen der Luft durch eine Auslaßöffnung (5) des Gebläsegehäuses (1). Das Gebläserad (2) weist eine kreisförmige Bodenplatte (6) mit zentrisch angeordnetem Lager (7) für die Antriebswelle (8) auf, an deren der Antriebswelle (8) abgewandten Seite Lüfterblätter (9) senkrecht vorstehen, die sich in der Art eines Tangentiallüfters in radialer Richtung vom Zentrum aus zum Rand der Bodenplatte (6) hin erstrecken. Zwei oder mehrere, höchstens jedoch jedes zweite der Lüfterblätter tragen an ihrer der Bodenplatte (6) abgewandten Stirnfläche ein in Ansaugrichtung der Luft vorstehendes Häckselblatt (10).

## Beschreibung

Blas- und Saugvorrichtung, insbesondere Saughäcksler zum Sammeln und Zerkleinern von Laub und dergleichen.

Die Erfindung betrifft eine Blas- und Saugvorrichtung, insbesondere Saughäcksler zum Sammeln und Zerkleinern von Laub, Gras, Abfall und dergleichen, mit einem Gebläsegehäuse und einem darin angeordneten, durch eine Antriebseinheit drehantreibbaren Gebläserad zum Ansaugen von Luft durch eine Einlaßöffnung des Gebläsegehäuses und zum Ausstoßen der Luft durch eine Auslaßöffnung des Gebläsegehäuses, wobei das Gebläserad eine kreisförmige Bodenplatte mit zentrisch angeordnetem Lager für die Antriebswelle aufweist, an deren der Antriebswelle abgewandten Seite Lüfterblätter senkrecht vorstehen, die sich in der Art eines Tangentiallüfters in radialer Richtung vom Zentrum aus zum Rand der Bodenplatte hin erstrecken.

Eine derartige Vorrichtung ist beispielsweise aus der DE 38 36 748 bekannt. Das Gebläserad wird hierbei nicht nur zum Ansaugen der Luft eingesetzt, sondern hat darüber hinaus die Aufgabe, das angesaugte Material nach Möglichkeit auch zu zerkleinern. Da das angesaugte Material jedoch häufig auch Teile enthält, die sich nicht zerkleinern lassen, müssen die zwischen den Lüfterblättern gebildeten Kammern ausreichend groß sein, um den Durchtritt dieser Teile ohne weiteres zu ermöglichen. Die Zahl der Lüfterblätter darf daher nicht zu groß sein, da sonst die Gefahr besteht, daß diese Teile sich zwischen zwei Lüfterblättern verklemmen und damit nicht nur zu einer erheblichen Unwucht des sich drehenden Gebläserades, sondern darüber hinaus auch zu einer verringerten Saugleistung führen.

Die geringe Zahl an Lüfterblätter verschlechtert jedoch die Luftförderleistung des Gebläserades und führt damit insbesondere zu einem schlechteren Wirkungsgrad.

Der Erfindung liegt die Aufgabe zugrunde, eine Blas- und Saugvorrichtung der eingangs genannten Art so zu verbessern, daß auch bei einer erhöhten Luftförderleistung aufgrund einer Vielzahl von Lüfterblättern das Zusetzen bzw. Verstopfen der zwischen den Lüfterblättern gebildeten Kammern zuverlässig vermieden wird.

Diese Aufgabe wird nach der Erfindung dadurch gelöst, daß zwei oder mehrere, höchstens jedoch jedes zweite der Lüfterblätter an ihrer der Bodenplatte abgewandten Stirnfläche ein in Ansaugrichtung der Luft vorstehendes Häckselblatt tragen.

Der durch die Erfindung erreichte Vorteil besteht im wesentlichen darin, daß die Häckselblätter eine Vorzerkleinerung des angesaugten Materials vornehmen, wobei diese einen ausreichenden gegenseitigen Abstand haben, um ein Verstopfen zu vermeiden. Erst das vorzerkleinerte Material gelangt dann in den Bereich der Lüfterblätter, wo anschließend eine weitere Zerkleinerung des Materials erfolgt. Damit kommen dort jedoch keine Teile mehr an, die ausreichend groß wären, um sich zwischen den Lüfterblättern festzusetzen. Das Gebläserad kombiniert somit die Vorteile eines nur wenige Lüfterblätter aufweisenden Gebläserades, das infolge der großen Abstände nicht verstopfen kann, mit den Vorteilen der hohen Saugleistung eines eine Vielzahl von Lüfterblättern aufweisenden Gebläserades.

Die Lüfterblätter können unter strömungstechnischen Gesichtspunkten in ihrer Formgebung geeignet gestaltet sein, insbesondere einen - bezogen auf die Drehachse - leicht spiralförmigen Verlauf besitzen. In jedem Fall ist hierbei im Rahmen der Erfindung vorgesehen, daß die Häckselblätter in ihrer Oberflächenkontur und Formgebung den Lüfterblättern angepaßt sind.

In einer besonders günstigen und daher im Rahmen der Erfindung bevorzugten Ausführungsform sind die Häckselblätter einstückig mit den Lüfterblättern ausgebildet. Dies hat im übrigen den Vorteil, daß die gesamte Einheit im Falle von auftretenden Verschleißerscheinungen ohne weiteres ausgetauscht werden kann.

Es besteht jedoch auch die Möglichkeit, daß die Häckselblätter als auswechselbare Teile lösbar an den Lüfterblättern angeschlossen sind.

Weiter hat es sich im Rahmen der Erfindung als vorteilhaft herausgestellt, wenn die freien Kanten der Häckselblätter eine zum Gebläserad koaxiale, gedachte Kegelfläche aufspannen.

Schließlich ist vorgesehen, daß die Häckselblätter sich vom Zentrum des Gebläserades aus bis etwa zwei Drittel des Radius erstrecken.

Im folgenden wird die Erfindung an einem in der Zeichnung dargestellten Ausführungsbeispiel näher erläutert; es zeigen:
- Fig. 1: einen Querschnitt durch die Blas- und Saugvorrichtung in nur teilweiser Wiedergabe,
- Fig. 2: einen Querschnitt durch den Gegenstand nach Fig. 1
in Draufsicht auf das Gebläserad,
- Fig. 3: das Gebläserad in Detaildarstellung,
- Fig. 4: einen Schnitt durch den Gegenstand nach Fig. 3 längs der Linie IV - IV,
- Fig. 5: einen Querschnitt durch den Gegenstand nach Fig.
3 längs der Linie V - V.

Die in der Zeichnung dargestellte Blas- und Saugvorrichtung dient insbesondere zum Sammeln von Laub, Gras, Abfall und dergleichen Materialien und kann dabei auch als Saughäcksler ausgebildet sein, so daß die aufgenommenen Materialien zugleich zerkleinert werden.

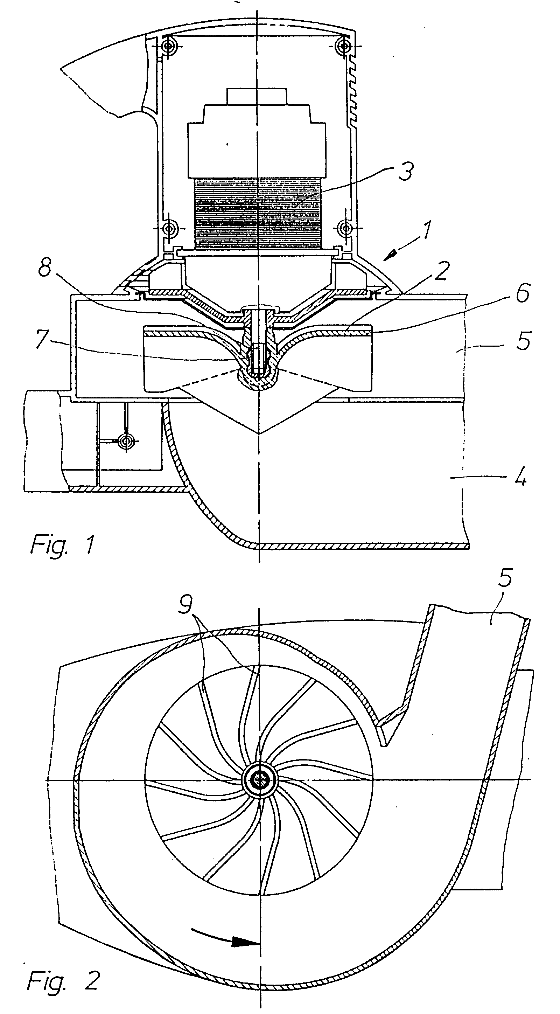

Im einzelnen besteht die Vorrichtung aus einem in Fig. 1 angedeuteten Gebläsegehäuse 1, in dem ein Gebläserad 2 drehantreibbar angeordnet ist. Hierzu ist eine ebenfalls nur schematisch angedeutete Antriebseinheit 3 vorgesehen.

Das Gebläserad 2 saugt Luft durch eine Einlaßöffnung 4 des Gebläsegehäuses 1 an, an das in nicht näher dargestellter Weise beispielsweise ein Ansaugschlauch angeschlossen sein kann. Die angesaugte Luft wird anschließend durch eine Auslaßöffnung 5 des Gebläsegehäuses 1 wieder ausgestoßen, wobei an diese Auslaßöffnung 5 z. B. ein Fangsack angeschlossen sein kann.

Das Gebläserad 2 besteht im einzelnen aus einer kreisförmigen Bodenblatte 6 mit einem zentrisch angeordneten Lager 7 für die Antriebswelle 8. Auf der der Antriebswelle 8 abgewandten Seite stehen Lüfterblätter 9 senkrecht hervor, die sich in der Art eines Tangentiallüfters in radialer Richtung vom Zentrum aus zum Rand der Bodenplatte 6 hin erstrecken.

Diese Lüfterblätter 9 können entweder plan oder auch zur Verbesserung der aerodynamischen Eigenschaften leicht spiralförmig ausgebildet sein.

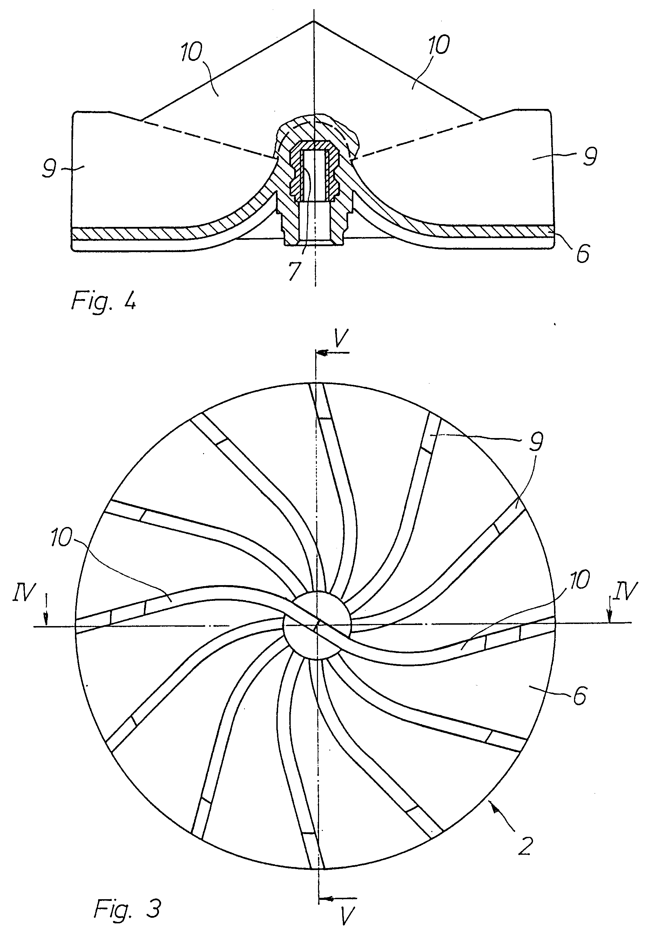

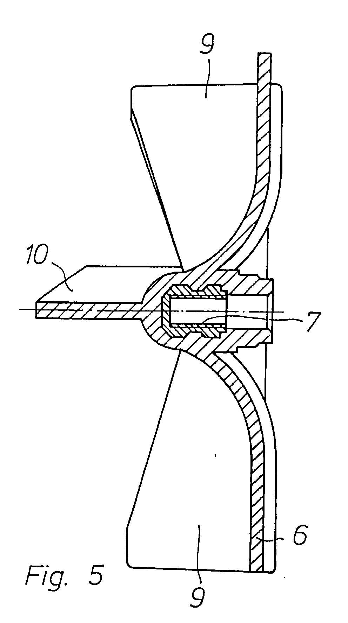

Wie aus den Fig. 3 bis 5 zu ersehen ist, tragen zwei der Lüfterblätter 9 an ihrer der Bodenplatte 6 abgewandten Stirnfläche ein Häckselblatt 10, das in Ansaugrichtung der Luft vorsteht. Dieses Häckselblatt 10 sorgt für eine Vorzerkleinerung des angesaugten Materials, so daß dieses sich in den zwischen den Lüfterblättern 9 gebildeten, aufgrund der großen Anzahl der Lüfterblätter 9 relativ schmalen Kammern 11 nicht verklemmen bzw. festsetzen können.

Wie insbesondere der Fig. 3 zu entnehmen ist, sind die Häckselblätter 10 in ihrer Oberflächenkontur und Formgebung den Lüfterblättern 9 angepaßt. Insbesondere sind die Häckselblätter 10 einstückig mit den Lüfterblättern 9 ausgebildet. Es besteht jedoch ebenso die in der Zeichnung nicht näher dargestellte Möglichkeit, die Häckselblätter 10 als auswechselbare Teile lösbar an den Lüfterblättern 9 anzuschließen.

Die freien Kanten der Häckselblätter 10 spannen bei der Rotation des Gebläserades 2 eine zum Gebläserad 2 koaxiale, gedachte Kegelfläche auf, wie dies aus der Fig. 4 gut zu ersehen ist. Schließlich ist die Breite der Häckselblätter 10 so gewählt, daß diese sich vom Zentrum des Gebläserades 2 aus bis etwa zwei Drittel des Radius erstrecken.

## Patentansprüche

1. Blas- und Saugvorrichtung, insbesondere Saughäcksler zum Sammeln und Zerkleinern von Laub, Gras, Abfall und dergleichen, mit einem Gebläsegehäuse (1) und einem darin angeordneten, durch eine Antriebseinheit (3) drehantreibbaren Gebläserad (2) zum Ansaugen von Luft durch eine Einlaßöffnung (4) des Gebläsegehäuses (1) und zum Ausstoßen der Luft durch eine Auslaßöffnung (5) des Gebläsegehäuses (1), wobei das Gebläserad (2) eine kreisförmige Bodenplatte (6) mit zentrisch angeordnetem Lager (7) für die Antriebswelle (8) aufweist, an deren der Antriebswelle (8) abgewandten Seite Lüfterblätter (9) senkrecht vorstehen, die sich in der Art eines Tangentiallüfters in radialer Richtung vom Zentrum aus zum Rand der Bodenplatte (6) hin erstrecken, dadurch gekennzeichnet, daß zwei oder mehrere, höchstens jedoch jedes zweite der Lüfterblätter (9) an ihrer der Bodenplatte (6) abgewandten Stirnfläche ein in Ansaugrichtung der Luft vorstehendes Häckselblatt (10) tragen.

2. Blas- und Saugvorrichtung nach Anspruch 1, dadurch gekennzeichnet, daß die Häckselblätter (10) in ihrer Oberflächenkontur und Formgebung den Lüfterblättern (9) angepaßt sind.

3. Blas- und Saugvorrichtung nach Anspruch 1 oder 2, dadurch gekennzeichnet, daß die Häckselblätter (10) einstückig mit den Lüfterblättern (9) ausgebildet sind.

4. Blas- und Saugvorrichtung nach Anspruch 1 oder 2, dadurch gekennzeichnet, daß die Häckselblätter (10) als auswechselbare Teile lösbar an den Lüfterblättern (9) angeschlossen sind.

5. Blas- und Saugvorrichtung nach einem der Ansprüche 1 bis 4, dadurch gekennzeichnet, daß die freien Kanten der Häckselblätter (10) eine zum Gebläserad (2) koaxiale, gedachte Kegelfläche aufspannen.

6. Blas- und Saugvorrichtung nach einem der Ansprüche 1 bis 4, dadurch gekennzeichnet, daß die Häckselblätter (10) sich vom Zentrum des Gebläserades (2) aus bis etwa zwei Drittel des Radius erstrecken.
